Europäisches Patentamt

European Patent Office

Office européen des brevets

(19)

(11) Veröffentlichungsnummer: **0 177 872**
**B1**

(12) # EUROPÄISCHE PATENTSCHRIFT

(45) Veröffentlichungstag der Patentschrift:
16.08.89

(51) Int. Cl.⁴: **B 32 B 27/20**, B 32 B 27/32

(21) Anmeldenummer: 85112387.7

(22) Anmeldetag: 01.10.85

(54) Mehrschichtige opake Folie niedriger Dichte.

(30) Priorität: 09.10.84 DE 3436961
20.04.85 DE 3514398

(43) Veröffentlichungstag der Anmeldung:
16.04.86 Patentblatt 86/16

(45) Bekanntmachung des Hinweises auf die Patenterteilung:
16.08.89 Patentblatt 89/33

(84) Benannte Vertragsstaaten:
BE DE FR GB IT NL

(56) Entgegenhaltungen:
EP-A- 0 004 633
EP-A- 0 114 311
EP-A- 0 143 567
GB-A- 1 384 556

(73) Patentinhaber: HOECHST AKTIENGESELLSCHAFT,
Postfach 80 03 20, D-6230 Frankfurt am Main 80 (DE)

(72) Erfinder: Janocha, Siegfried, Dr., Weinfeldstrasse 28,
D-6200 Wiesbaden (DE)
Erfinder: Crass, Günther, Bachstrasse 7,
D-6204 Taunusstein 4 (DE)
Erfinder: Bothe, Lothar, Dr., Am Heiligenhaus 9,
D-6500 Mainz-Gonsenheim (DE)
Erfinder: Schlögl, Gunter, Dr., Finkenweg 2,
D-6233 Kelkheim (DE)

## Beschreibung

Die Erfindung bezieht sich auf eine coextrudierte, biaxial orientierte opake Folie mit einem niedrigen Dichtewert, aufgebaut aus einer Basisschicht, die im wesentlichen aus Polypropylen und Füllstoffen besteht, und einseitig oder beidseitig vorhandenen Oberflächenschichten. Die Erfindung betrifft ferner ein Verfahren zur Herstellung dieser Folien und ihre Verwendung.

Eine Folie dieser Art ist aus der DE-B-2 814 311 (EP-A 0 004 633) bekannt. Sie soll nach der Lehre dieser Druckschrift vorzugsweise 5 bis 15 Gew.-% und nach dem Beispiel nur 8 Gew.-% Füllstoffpartikel enthalten. Bei ihrer Herstellung soll es nicht kritisch sein, die Längs- und Querstreckung nacheinander oder simultan durchzuführen. Auch den Streckverhältnissen wird keine Bedeutung beigemessen, sie betragen nach dem Beispiel 5,5 (in Längsrichtung) und 9,0 (in Querrichtung).

Die nach dem Beispiel dieser Druckschrift hergestellte Folie zeigt eine relativ geringe Dichte von 0,9 g/cm³, was auf eine große Anzahl von Hohlräumen (Vakuolen) zurückzuführen ist, welche beim Strecken der coextrudierten Folie entstanden sind.

Beim Strecken wird nämlich die Polymermatrix an den Korngrenzen der mit dem Polypropylen unverträglichen organischen oder anorganischen Füllstoffe aufgerissen, was zur Entstehung der genannten Vakuolen in der Folie, d.h. zu freien, leeren, ungefüllten Räumen in der Folie führt. Es versteht sich von selbst, daß diese Vakuolen oder Mikrohohlräume über das ganze Folienvolumen verteilt sind. Infolge der Brechung (Streuung) des Lichtes an diesen Hohlräumen zeigt die Folie eine opake, perlmuttartig glänzende Oberfläche.

Aufgrund der opaken oder perlmuttartigen Erscheinung haben diese Folien ein äußerst werbewirksames Aussehen. Da sie auch gut bedruckbar sind, werden sie vielseitig eingesetzt, insbesondere als Verpackungsfolie, wobei vor allem die Schokoriegel-Verpackung zu nennen ist. Einer noch breiteren Verwendung der bekannten coextrudierten und biaxial gestreckten opaken Polypropylen-Mehrschichtfolie steht insbesondere ihr Nachteil entgegen, daß sie relativ teuer und auch in verschiedenen mechanischen Eigenschaften noch zu verbessern ist. Hierzu gehören ihre Faltbarkeit, insbesondere ihre ausgeprägte Neigung, sich nach dem Umknicken, Falten oder Falzen wieder in ihre Ausgangslage vor der Faltung zurückzubiegen.

Diesen Nachteil zeigen im Prinzip alle streckorientierten Polypropylenfolien, auch wenn sie keine Füllstoffe enthalten. Diese Eigenschaft ist besonders unerwünscht, wenn die Folie als Verpackungsfolie zum Umhüllen von kleineren Gegenständen mit im wesentlichen rundem Querschnitt, wie z.B. Bonbons, Flaschen, Kerzen, Dropsrollen oder Schokoriegel, vorgesehen wird. Bei diesem Verfahren wird der Gegenstand von einem rechteckigen Folienzuschnitt zunächst voll umwickelt und durch Verdrehen oder Verdrillen der beiden überstehenden Folienenden der Verschluß gebildet. Biaxial orientierte Polypropylenfolien zeigen hierbei den Nachteil, daß sich ihre verdrillten Folienenden entgegen der Verdrehungsrichtung zurückbewegen, so daß dann die Gefahr besteht, daß sich die Verpackung öffnet.

Eine weitere Voraussetzung für die Drehung oder Verdrillung der Folie beim Verpacken ist ihre Eigenschaft, an den Drehstellen nicht einzureißen oder abzureißen, aber andererseits so steif zu sein, daß sie beim Drehvorgang nicht schrumpft oder krumpelt. Auch diese Eigenschaft ist bei den bekannten biaxial orientierten Polypropylenfolien nicht ausreichend vorhanden, weshalb beispielsweise für Bonboneinschläge vorwiegend Zellglas eingesetzt wird.

Ausgehend von dem aufgezeigten Stand der Technik besteht die Aufgabe der Erfindung somit darin, eine biaxial orientierte Polypropylenfolie anzugeben, die bei Verwendung als Verpackungsfolie verbesserte mechanische Eigenschaften aufweist, insbesondere eine verringerte Neigung zeigt, sich nach dem Umbiegen, Falten oder Verdrillen wieder in die Ausgangslage zurückzulegen.

Die Folie soll insbesondere für den Dreheinschlag von kleinen Gegenständen, wie Bonbons, geeignet sein, d.h. aufgrund ihrer mechanischen Eigenschaften eine einwandfreie Verdrehung gestatten. Andererseits soll sie aber auch preiswert herstellbar sein, indem sie mit einem geringen Aufwand an Folienmaterial auskommt, ohne daß ihre Festigkeit unzureichend wird. Darüber hinaus soll sie aber in ihrem optischen Erscheinungsbild das Geschmacksempfinden der Verbraucher ansprechen.

Diese Aufgabe wird durch die Folie mit den im Anspruch 1 genannten Merkmalen, durch das Verfahren nach Anspruch 7 und durch die Verwendung nach Anspruch 8 gelöst.

Die erfindungsgemäße, durch Coextrusion hergestellte ein- oder beidseitig beschichtete und nacheinander in Längsrichtung bei einer Temperatur von 120 bis 130°C und in Querrichtung bei einer Temperatur von 160 bis 170°C gestreckte opake Folie mit einem niedrigen Dichtewert ist aus einer Basisschicht aus im wesentlichen Propylen und Füllstoffen aufgebaut. Es ist erfindungswesentlich, daß die Menge an Füllstoff, bezogen auf das Gesamtgewicht von Polypropylen und Füllstoff, relativ groß ist und 16 bis 30 Gew.-% beträgt, der eingesetzte Füllstoff eine mittlere Teilchengröße von 2 bis 5 µm hat und die Folie relativ stark gestreckt wird, und zwar nacheinander um das 5,7- bis Siebenfache längsgestreckt und um das Acht- bis Zehnfache quergestreckt, und ihre Dichte äußerst niedrig ist, nämlich gleich oder kleiner als 0,6 g/cm³.

Diese Problemlösung ist besonders überraschend, weil sie einerseits vorschlägt, einen relativ großen Anteil an Füllstoff mit seiner relativ großen Dichte zu verwenden, andererseits aber die Gesamtdichte der Folie stark zu reduzieren, d. h. den Anteil an Hohlräumen zu erhöhen, ohne daß hierzu irgendwelche gasbildenden Substanzen verwendet werden. Diese Folie läßt sich besser falten. Sie zeigt eine deutlich reduzierte Rückstellfähigkeit, die sich in einer verringerten Neigung zur Rückformung gefalteter Folienteile äußert, und ist deshalb insbesondere zur Verwendung als Einschlagfolie auf dem Verpackungssektor einsetzbar.

Daß die so einfach erscheinende Maßnahme der Erhöhung der Füllstoffmenge überhaupt eine Absenkung der Dichte der fertigen Folie gestattet, zumal durch die erhöhte Füllstoffmenge die rechnerische Dichte der Polypropylen-Füllstoff-Mischung, aus der die Folie hergestellt wird, erhöhen muß, war nicht vorhersehbar. Das Ausmaß der Dichteerniedrigung, das ist der prozentuale Unterschied der Dichte der Polypropylen-Füllstoff-Mischung und der Dichte der fertigen Folie, ist bei der erfindungsgemäßen Folie besonders hoch, da die fertige Folie eine besonders niedrige Dichte aufweist. Es war ferner eigentlich zu erwarten, daß eine Polypropylenfolie mit einem auf Kosten des Polymeranteils relativ hohen Füllstoffgehalt, wenn überhaupt, nur noch mit Schwierigkeiten herstellbar und insbesondere biaxial streckbar sein wird. Entgegen dieser Erwartung läßt sich die erfindungsgemäße Folie überraschenderweise leicht herstellen und auch biaxial strecken, wobei die Werte für die Längsstreckung sogar noch höher liegen als bei dem bisherigen Verfahren zur Herstellung opaker Polypropylenfolien niedriger Dichte.

Wenn die Menge an Füllstoff kleiner als 16 Gew.-% ist, bezogen auf das Gesamtgewicht von Polypropylen und Füllstoff, wird die angestrebte niedrige Dichte nicht erreicht. Ist sie andererseits größer als 30 Gew.-%, kann die Folie bei den genannten Bedingungen nicht mehr gestreckt werden. Analoges gilt auch für die Teilchengröße des pulverförmigen Füllstoffes. Neben den beiden Merkmalen, Füllstoffmenge und Füllstoff-Teilchengröße, muß bei der Herstellung der Folie darauf geachtet werden, daß die Längs- und Querstreckverhältnisse im angegebenen Bereich liegen, damit die angestrebte Folie erhalten wird.

Eine erfindungsgemäß bevorzugte Folie ist dadurch gekennzeichnet, daß die Menge an Füllstoff, bezogen auf das Gesamtgewicht von Polypropylen und Füllstoff, 16 bis 27 Gew.-% beträgt und der eingesetzte Füllstoff eine mittlere Teilchengröße von 3 bis 4 μm hat.

Die erfindungsgemäße Folie hat eine Dichte von 0,4 bis 0,6, vorzugsweise 0,4 bis 0,5 g/cm³. Ihre Dicke beträgt etwa 10 bis 80 μm, vorzugsweise 20 bis 60 μm, die Dicke der Beschichtung hat an der Gesamtdicke der Folie nur einen geringen Anteil und beträgt zweckmäßigerweise 0,1 bis 10 μm. In bevorzugter Ausführungsform besteht die äußere Beschichtung aus siegelbarem Material.

Das Polypropylen der Basisschicht kann ein isotaktisches Homopolymerisat oder Copolymerisat des Propylens mit Ethylen oder alpha-Olefinen mit 4 bis 8 C-Atomen oder eine Mischung aus Propylen-Homo- und Propylen-Copolymerisaten sein. In den Copolymerisaten beträgt die Comonomermenge im allgemeinen maximal 10 Gew.-%, bezogen auf das Copolymerisat. Bevorzugte Comonomere sind Ethylen und Buten-(1). Das Polymere der Basisschicht hat zweckmäßigerweise einen Schmelzflußindex im Bereich von 0,5 g/10 min bis 8 g/10 min bei 230°C und 2,16 kp Belastung (DIN 53735), insbesondere von 1,5 g/10 min bis 4 g/10 min.

Bei den Füllstoffen handelt es sich um die üblichen anorganischen oder organischen, mit Polypropylen unverträglichen, pulverförmigen Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Die Füllstoffmenge beträgt erfindungsgemäß 16 bis 30 Gew.-%, vorzugsweise 16 bis 27 Gew.-%, bezogen auf das Gewicht des vorhandenen Polypropylens. Die mittlere Teilchengröße des pulverförmigen Füllstoffes liegt erfindungsgemäß im Bereich von 2 bis 5 μm, vorzugsweise im Bereich von 3 bis 4 μm. Die Basisschicht kann auch zweckmäßige Additive wie Antioxidantien, Antistatika, Farbstoffe und/oder Stabilisatoren in einer jeweils wirksamen Menge enthalten.

Bei den Oberflächenschichten handelt es sich in der Regel um heiß- oder kaltsiegelfähige Schichten. Es kann sich auch um nichtsiegelbare Schichten handeln. Alle diese Schichten können ein- oder beidseitig vorliegen. Die Heißsiegelschicht besteht vorzugsweise aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten-(1), vorzugsweise in einer Menge von 10 bis 15 Gew.-% (bezogen auf das Copolymerisat), einem Terpolymerisat aus Propylen, Ethylen und einem alpha-Olefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines alpha-Olefins mit 4 bis 10 Kohlenstoffatomen, oder aus einer Mischung dieser Polymeren. Die Comonomeren sind in den Polymerisaten im wesentlichen statistisch verteilt (vgl. DE-B-28 14 311). Geeignete Kaltsiegelschichten bestehen aus Polymerisaten auf der Basis von natürlichem oder synthetischem Kautschuk. Die nichtsiegelbare Oberflächenschicht besteht vorzugsweise aus einem entsprechenden Propylenhomopolymerisat.

Die Dicke der Heißsiegelschicht beträgt etwa 0,1 bis 10 μm, vorzugsweise 0,5 bis 2 μm. Die Kaltsiegelschicht und die nichtsiegelbare Schicht weisen in der Regel ebenfalls eine solche Dicke auf.

Es hat sich bei Verwendung der Folie für die Verpackung von Bonbons als vorteilhaft erwiesen, wenn eine der beiden äußeren heißsiegelfähigen Schichten, welche die Außenseite der Bonbonumhüllung bildet, zusätzlich noch ein antiadhäsiv wirkendes Mittel enthält. Durch diesen Zusatz läßt sich ein Verkleben der die Bonbons umhüllenden Folie mit der Außenumhüllung, z.B. in Form eines Folienbeutels, bei höheren Temperaturen vermeiden.

Bei dem Verfahren zur Herstellung der erfindungsgemäßen Folie wird die Schmelze der die Basisschicht bildenden Polymermischung aus im wesentlichen Polypropylen und Füllstoffen, wobei die Menge an Füllstoff, bezogen auf das Gesamtgewicht von Polypropylen und Füllstoff, 16 bis 30, vorzugsweise 16 bis 27 Gew.-% beträgt, und der eingesetzte Füllstoff eine Teilchengröße von 2 bis 5, vorzugsweise 3 bis 4 μm hat, zusammen mit der Schmelze des die äußeren Schichten bildenden Polymeren durch eine Flachdüse oder Runddüse coextrudiert, die durch Coextrusion erhaltene Folie durch Abkühlen verfestigt, anschliessend bei einer Temperatur von 120 bis 130°C im Verhältnis von 5,7:1 bis 7:1 langgestreckt und bei einer Temperatur von 160 bis 170°C im Verhältnis von 8:1 bis 10:1 quergestreckt und die biaxial gestreckte Folie thermofixiert.

Zum biaxialen Strecken der Folie kann zuerst in Längsrichtung und anschließend in Querrichtung oder zuerst in Querrichtung und dann in Längsrichtung gestreckt werden. Wesentlich ist, daß die Längs- und Querstreckung nacheinander und bei den angegebenen Temperaturen und Streckverhältnissen vorgenommen werden. Die Coextrusion der die Basisschicht bildenden Mischung und des die Oberflächenschicht bildenden Polymeren mittels einer Flachdüse, das Abkühlen der coextrudierten Folie zu ihrer Verfestigung, das Wiedererhitzen der Folie auf die Strecktemperatur, die Längs- und Querstreckung und die abschließende Thermofixierung werden, wie in der DE-B-28 14 311 beschrieben, durchgeführt, wobei allerdings der Bereich für das Längsstreckverhältnis nach dem Verfahren der Erfindung höher liegt als der dort angegebene Wert von 5,5:1. Das Abkühlen der Flachfolie zwecks Verfestigung und ihr Wiedererhitzen auf Strecktemperatur wird zweckmäßigerweise mit Hilfe einer oder mehrerer Walzen vorgenommen, die auf einer entsprechenden Temperatur gehalten werden. Die Längsstreckung der Folie wird üblicherweise mit Hilfe zweier entsprechend dem angestrebten Streckverhältnis verschieden schnell laufender Walzenpaare durchgeführt, und ihre Querstreckung erfolgt mit Hilfe eines entsprechenden Kluppenrahmens. Es ist zweckmäßig, die Folie nach der ersten Streckung abzukühlen und auf dem Weg zur zweiten Streckung wieder auf die erforderliche Strecktemperatur zu bringen. An die Streckung der Folie schließt sich ihre Thermofixierung (Wärmebehandlung) an, die bei einer Temperatur von 150 bis 170°C über eine Zeitdauer von 0,5 bis 10 Sekunden durchgeführt wird.

Die erfindungsgemäße opake Folie, deren Dichte im Bereich von 0,4 bis 0,6 g/cm³ liegt, wird vorzugsweise für Verpackungszwecke eingesetzt. Aufgrund ihrer erhöhten Ergiebigkeit sowie ihrer verringerten Rückstellfähigkeit stellt sie einen besonders vorteilhaften Ersatz für Verpackungspapier dar. Sie eignet sich überraschenderweise besonders gut für den Dreheinschlag von kleinen Gegenständen, wie Bonbons, wobei sie trotz ihrer geringen Dichte beim Drehvorgang nicht einreißt, aber auch nicht zu Überdehnung oder Krumpeln neigt. Die Folie besitzt durch ihre Opazität und perlmuttartigen Glanz werbewirksames Aussehen, welches durch Verwendung farbiger Füllstoffe noch verstärkt werden kann. Außerdem kann sie, falls für spezielle Einsatzgebiete erforderlich, problemlos mit einer mehrfarbigen Bedruckung versehen werden.

Die Erfindung wird nun an Beispielen noch näher erläutert.

### Beispiel 1

Es wurde eine Polypropylenfolie mit beidseitig vorhandenen heißsiegelfähigen Oberflächenschichten bei etwa 270°C durch eine Flachdüse coextrudiert. Die Mischung (Schmelze) der die Basisschicht bildenden Folie bestand aus 80 Gew.-Teilen Propylen-Homopolymerisat und 20 Gew.-Teilen pulverförmigem Calciumcarbonat mit einer mittleren Teilchengröße von 3,8 μm. Die Schmelze des die Oberflächenschichten bildenden Polymeren bestand aus einem statistischen Copolymerisat von Propylen und 4 Gew.-% Ethylen. Nach dem Abkühlen der coextrudierten Folie mit einer Kühlwalze auf etwa 30°C wurde die Folie bei 125°C in Längsrichtung, Streckverhältnis 6,0, und dann bei 165°C in Querrichtung, Streckverhältnis 9,0, gestreckt. Die anschließende Thermofixierung erfolgte bei 160°C 5 Sekunden lang.

Die so erhaltene opake Mehrschichtfolie hatte eine Dichte von 0,46 g/cm³ und eine Dicke von 35 μm, die Dicke der Heißsiegelschichten betrug jeweils 1 μm.

### Beispiel 2

Es wurde eine Polypropylenfolie mit beidseitig vorhandenen heißsiegelfähigen Oberflächenschichten bei etwa 270°C durch eine Flachdüse coextrudiert. Die die Basisschicht bildende Schmelze bestand aus 75 Gew.-Teilen Propylen-Homopolymerisat und 25 Gew.-Teilen pulverförmigem Cadiumcarbonat mit einer mittleren Teilchengröße von 3,2 μm. Die Schmelze des die Oberflächenschichten bildenden Polymeren bestand aus dem in Beispiel 1 genannten Copolymerisat. Es wurde wie in Beispiel 1 vorgegangen, mit dem Unterschied, daß die Längsstreckung mit einem Streckverhältnis von 6,8 und die Querstreckung mit einem Streckverhältnis von 8,5 durchgeführt wurde.

Die so erhaltene opake Mehrschichtfolie hatte eine Dichte von 0,42 g/cm³ und eine Dicke von 50 μm, die Dicke der Heißsiegelschichten betrug jeweils 1μm.

Die nach den Beispielen hergestellten Folien zeigen eine sehr geringe Neigung. sich nach dem Falten und Einwickeln von quaderförmigen Gegenständen wieder zu entfalten und in ihre plane Form zurückzubilden.

Zur Überprüfung ihrer Eigenschaften beim Einwickeln von Bonbons wurden mit einer Bonboneinwickelmaschine, wie sie in «Verpacken mit Kunststoffen», Seite 231/232 (Günther Kühne. Carl-Hanser Verlag München 1974) beschrieben wird, 5000 Bonbons einzeln durch Dreheinschlag verpackt. Es wurden keine Folieneinrisse oder -abrisse beobachtet. die verdrillten Folienabschnitte zeigten eine gute Steifigkeit, so daß sich die Verpackung durch eigenständiges Aufdrehen entgegen der Verdrillungsrichtung nicht von selbst öffnete. Andererseits ließ sich die Verpackung leicht öffnen, um den verpackten Inhalt zu entnehmen.

### Patentansprüche

1. Coextrudierte, biaxial orientierte opake Folie mit einem niedrigen Dichtewert. aufgebaut aus einer Basisschicht. die im wesentlichen aus Polypropylen und Füllstoffen besteht. und einseitig oder beidseitig vorhandenen Oberflächenschichten. dadurch gekennzeichnet, daß die Folie zur Verbesserung ihrer Eigenschaften als Verpackungsfolie in der Basisschicht 16 bis 30 Gew.-% an Füllstoff, bezogen auf das Gesamtgewicht von Polypropylen und Füllstoff, enthält, der eingesetzte Füllstoff eine mittlere Teilchengröße von 2 bis 5 μm hat, die Folie eine Dichte von 0,4 bis 0,6, insbesondere 0,4 bis 0,5 g/cm³ aufweist und in Längsrichtung im Verhältnis von 5,7:1 bis 7:1 und in Querrichtung im Verhältnis von 8:1 bis 10:1 gestreckt ist.

2. Folie nach Anspruch 1, dadurch gekennzeichnet, daß die Menge an Füllstoff 16 bis 27 Gew.-% beträgt.

3. Folie nach Anspruch 1 oder 2, dadurch gekennzeichnet, daß der eingesetzte Füllstoff eine mittlere Teilchengröße von 3 bis 4 μm hat.

4. Folie nach einem der Ansprüche 1 bis 3, dadurch gekennzeichnet, daß der Füllstoff aus Calciumcarbonat, insbesondere Kreide, besteht.

5. Folie nach einem der Ansprüche 1 bis 4, dadurch gekennzeichnet, daß die Dicke der Oberflächenschicht 0,1 bis 10 μm und ihre Gesamtdicke 10 bis 80 μm beträgt.

6. Folie nach Anspruch 5, dadurch gekennzeichnet, daß mindestens eine der beiden Oberflächenschichten ein antiadhäsives Mittel, vorzugsweise 0,3 bis 3 Gew.-% Polydimethylsiloxan, bezogen auf diese Oberflächenschicht, enthält.

7. Verfahren zur Herstellung der Folie nach einem der Ansprüche 1 bis 6, bei dem man die Schmelze der die Basisschicht bildenden Mischung aus im wesentlichen Polypropylen und Füllstoffen, wobei die Menge an Füllstoff, bezogen auf das Gesamtgewicht von Polypropylen und Füllstoff, 16 bis 30, insbesondere 16 bis 27 Gew.-% beträgt, und der eingesetzte Füllstoff eine mittlere Teilchengröße von 2 bis 5, insbesondere 3 bis 4 μm hat, und die Schmelze des die Oberflächenschicht(en) bildenden Polymeren durch eine Flachdüse coextrudiert, die durch Coextrusion erhaltene Folie durch Abkühlen verfestigt, anschließend bei einer Temperatur von 120 bis 130°C im Verhältnis von 5,7:1 bis 7:1 längsstreckt und bei einer Temperatur von 160 bis 170°C im Verhältnis von 8:1 bis 10:1 querstreckt und die biaxial gestreckte Folie bei 150 bis 170°C über eine Zeitdauer von 0,5 bis 10 Sekunden thermofixiert.

8. Verwendung der Folie nach einem der Ansprüche 1 bis 6 für Verpackungszwecke, insbesondere als Papierersatz.

9. Verwendung der Folie nach Anspruch 8, gekennzeichnet durch die Verwendung beim Einwickeln von im Querschnitt im wesentlichen runden Gegenständen, insbesondere Bonbons.

## Claims

1. A coextruded, biaxially oriented opaque film having a low density and composed of a base layer which essentially consists of polypropylene and fillers, and surface layers present on one or both sides, wherein the film, in order to improve its properties as a packaging film, contains, in the base layer, 16 to 30% by weight of filler, based on the total weight of polypropylene and filler, the filler employed has a mean particle size of 2 to 5 μm, the film has a density of 0.4 to 0.6,

especially 0.4 to 0.5 g/cm³, and is stretched in the longitudinal direction in a ratio of 5.7:1 to 7:1 and in the transverse direction in a ratio of 8:1 to 10:1.

2. A film as claimed in claim 1, wherein the amount of filler is from 16 to 27% by weight.

3. A film as claimed in claim 1 or 2, wherein the filler employed has a mean particle size of 3 to 4 μm.

4. A film as claimed in any of claims 1 to 3, wherein the filler consists of calcium carbonate, especially chalk.

5. A film as claimed in any of claims 1 to 4, wherein the thickness of the surface layer is 0.1 to 10 μm and the total thickness is from 10 to 80 μm.

6. A film as claimed in claim 5, wherein at least one of the two surface layers contains a non-stick agent, preferably 0.3 to 3% by weight of polydimethylsiloxane, based on the said surface layer.

7. A process for the manufacture of the film as claimed in any of claims 1 to 6, wherein the melt of the mixture which forms the base layer and consists essentially of polypropylene and fillers, with the amount of filler being 16 to 30, especially 16 to 27%, by weight, based on the total weight of polypropylene and filler, and the filler employed having a mean particle size of 2 to 5, especially 3 to 4 μm, and the melt of the polymer forming the surface layer or layers are coextruded through a flat die, the film obtained by coextrusion is solidified by cooling and then stretched longitudinally at a temperature of 120 to 130°C in a ratio of 5.7:1 to 7:1 and transversely at a temperature of 160 to 170°C in ratio of 8:1 to 10:1, and the biaxially stretched film is heat-set at 150 to 170°C for a period of 0.5 to 10 seconds.

8. Use of the film according to any of claims 1 to 6 for packing purposes, especially as a paper substitute.

9. Use of the film according to claim 8 for wrapping articles of substantially round cross-section, in particular candies.

## Revendications

1. Feuille opaque coextrudée et étirée biaxialement ayant une faible densité, contituée d'une couche de base composée essentiellement de polypropylène et de charges, et de couches superficielles présentes sur l'une ou les deux faces, caractérisée en ce que la feuille renferme dans sa couche de base, pour améliorer ses propriétés comme feuille d'emballage, 16 à 30% en poids de charge, par rapport au poids total du polypropylène et de la charge, que la charge utilisée a une taille moyenne de particules de 2 à 5 μm, que la feuille a une densité de 0,4 à 0,6, en particulier 0,4 à 0,5 g/cm³ et qu'elle est étirée longitudinalement dans le rapport 5,7:1 à 7:1 et transversalement dans le rapport 8:1 à 10:1.

2. Feuille selon la revendication 1, caractérisée en ce que la quantité de charge est de 16 à 27% en poids.

3. Feuille selon la revendication 1 ou 2, caractérisée en ce que la charge introduite a une taille moyenne de particules de 3 à 4 μm.

4. Feuille selon l'une quelconque des revendications 1 à 3, caractérisée en ce que la charge consiste en carbonate de calcium, en particulier la craie.

5. Feuille selon l'une quelconque des revendications 1 à 4, caractérisée en ce que l'épaisseur de la couche superficielle est de 0,1 à 10 µm et son épaisseur totale est de 10 à 80 µm.

6. Feuille selon la revendication 5, caractérisée en ce qu'au moins une des deux couche superficielles contient un antiadhésif, de préférence 0,3 à 3% en poids de polydiméthylsiloxane par rapport à cette couche superficielle.

7. Procédé de fabrication de la feuille selon l'une quelconque des revendications 1 à 6, caractérisé en ce que l'on coextrude à l'aide d'une filière plate la masse fondue du mélange formant la couche de base constituée essentiellement de polypropylène et de charges (où la quantité de charge, rapportée au poids total de polypropylène et de charge, est de 16 à 30, de préférence 16 à 27% en poids, et la charge utilisée a une taille moyenne de particules de 2 à 5, préférentiellement 3 à 4 µm), et la masse fondue du polymère formant la (les) couche(s) superficielle(s), on solidifie par refroidissement la feuille obtenue par coextrusion, puis on l'étire longitudinalement à une température de 120 à 130°C selon un rapport de 5,7:1 à 7:1 et transversalement à une température de 160 à 170°C selon un rapport de 8:1 à 10:1 et que la feuille étirée biaxialement est ensuite durcie à la chaleur à 150 à 170°C pendant une durée de 0,5 à 10 secondes.

8. Utilisation pour emballage de la feuille conforme à l'une quelconque des revendications 1 à 6, en particulier comme succédané du papier.

9. Utilisation de la feuille selon la revendication 8, caractérisée par son emploi pour l'enveloppement d'objets de section généralement ronde, en particulier des bonbons.